# EUROPEAN PATENT APPLICATION

(11) **EP 2 523 055 A2**
(43) Date of publication of application: **14.11.2012**
(21) Application number: 12166543.4
(22) Date of filing: 03.05.2012
(51) Int. Cl.: G05B 15/02

(54) **Systems and methods for use in improving operation of utility equipment**

(30) Priority: 11.05.2011 US 201113105025
(71) Applicant: General Electric Company, Schenectady, NY 12345 (US)
(72) Inventor: Dam, Quang Binh, Atlanta, GA 30339-8402 (US)
(74) Representative: Picker, Madeline Margaret

(57) **Abstract**

Systems and methods for use in operating utility equipment that includes a plurality of controllable components. A computing device determines that a first controllable component of a plurality of controllable components is ineligible for an actuation based at least in part on operating conditions associated with the controllable components. A disregard indicator representing that the first controllable component is ineligible for the actuation is associated with the first controllable component by the computing device. An operation enhancement algorithm is executed by the computing device to determine a desired operation of the controllable components. The first controllable component is excluded from the operation enhancement algorithm based on the disregard indicator.

## Description

### BACKGROUND OF THE INVENTION

The subject matter disclosed herein relates generally to utility networks and, more specifically, to systems and methods for use in improving the operation of components in a utility network.

At least some known utility networks are used to convey a utility, such as electricity or natural gas, from one or more sources to one or more demand points or sites. The utility may be conveyed by controllable components, such as switches, capacitors, and/or transformers. In some cases, the operation of such components is determined at least in part by a controller that executes an operation enhancement algorithm. For example, a controller may determine how to actuate the components in an effort to increase a power factor.

Known operation enhancement algorithms may be computationally complex and/or include hundred or thousands of different variables. Executing such algorithms against all variables may require significant computing resources and/or a significant amount of time. Accordingly, the process of improving the operation of the utility network may be associated with substantial hardware costs and/or substantial delays.

### BRIEF DESCRIPTION OF THE INVENTION

In one aspect, a system for use in operating utility equipment that includes a plurality of controllable components is provided. The system includes a memory device and a processor coupled to the memory device. The memory device is configured to store operating conditions that are associated with the controllable components. The processor is programmed to determine that a first controllable component of the plurality of controllable components is ineligible for an actuation based on the stored operating conditions, and to associate a disregard indicator with the first controllable component. The disregard indicator represents that the first controllable component is ineligible for the actuation. The processor is also programmed to execute an operation enhancement algorithm to determine a desired operation of the controllable components. The first controllable component is excluded from the operation enhancement algorithm based on the disregard indicator.

In another aspect, a method for use in operating utility equipment that includes a plurality of controllable components is provided. The method includes determining, by a computing device, that a first controllable component of a plurality of controllable components is ineligible for an actuation based at least in part on past operating conditions associated with the first controllable component. A disregard indicator representing that the first controllable component is ineligible for the actuation is associated with the first controllable component by the computing device. An operation enhancement algorithm is executed by the computing device to determine a desired operation of the controllable components. The first controllable component is excluded from the operation enhancement algorithm based on the disregard indicator.

In yet another aspect, one or more non-transitory computer-readable storage media having computer-executable instructions embodied thereon are provided. When executed by at least one processor, the computer-executable instructions cause the at least one processor to determine that a first controllable component of a plurality of controllable components is ineligible for an actuation based at least in part on operating conditions associated with the first controllable component, to associate with the first controllable component a disregard indicator representing that the first controllable component is ineligible for the actuation, and to execute an operation enhancement algorithm to determine a desired operation of the controllable components. The first controllable component is excluded from the operation enhancement algorithm based on the disregard indicator.

### BRIEF DESCRIPTION OF THE DRAWINGS

Fig. 1 is a block diagram of an example computing device;
Fig. 2 is block diagram of an example utility system including a first equipment controller, a second equipment controller, and an operation enhancement device that are coupled in communication via a network;
Fig. 3 is a flowchart of an example method that may be used in operating utility equipment within the utility system shown in Fig. 2; and
Fig. 4 is a flowchart of an example method for determining whether a controllable component is eligible for an actuation in accordance with the method shown in Fig. 3.

### DETAILED DESCRIPTION OF EMBODIMENTS OF THE INVENTION

The embodiments described herein enable simplifying a utility system operation enhancement algorithm executed by a computing device by identifying and eliminating from consideration decision variables that do not represent eligible outputs of the operation enhancement algorithm. For example, a decision variable that represents an activation of a piece of utility equipment may be omitted from consideration if recent activations of the piece of equipment have exceeded a predetermined maximum quantity of actuations. Similarly, a decision variable that represents an increase to a voltage level associated with a piece of equipment may be omitted from consideration if the voltage level associated with the equipment is already above a maximum threshold value, or if increasing the voltage level would result in some other operating condition (e.g., a temperature) to violate a corresponding threshold value. Reducing the quantity of decision variables considered by the operation enhancement algorithm facilitates decreasing the computing resources (e.g., processing capacity, memory capacity, and/or time) required to execute such an algorithm.

As used herein, the term "utility equipment" refers to one or more physical devices, facilities, and/or structures that facilitate conveying a utility, such as, but not limited to, electricity. In example embodiments equipment includes controllable components, such as switches, valves, and/or capacitors, that may be actuated by an equipment controller. Actuations that are available with respect to a controllable component may be specific to the function of the component and may further include operating the component in any mode supported by the component. For example, actuating a two-position switch may include opening the switch and/or closing the switch. Actuating a valve may include adjusting the valve to any position between, and including, a fully open position and a fully closed position.

In example embodiments, actuations are expressed as binary values, scalar values, and/or vector values. Binary values may include, for example, activating or deactivating a component, and opening or closing a component. Scalar values may include, for example, a magnitude (e.g., a voltage level or a one-dimensional position, such as 30% open) and/or a direction (e.g., upward or downward). Vector values include a plurality of binary and/or scalar values. For example, a vector value may include a magnitude and a direction (e.g., an increase of 200 volts). Accordingly, a plurality of potential actuations may be associated with a controllable component.

Embodiments are described herein with reference to utility networks and utility equipment for electricity. However, embodiments of the present invention may be used in connection with any type of utility service.

An example technical feature of the methods, systems, and apparatus described herein includes at least one of (a) determining, by a computing device, that a first controllable component of a plurality of controllable components is ineligible for an actuation based at least in part on operating conditions associated with the first controllable component; (b) associating, by the computing device, a disregard indicator with the first controllable component, wherein the disregard indicator represents that the first controllable component is ineligible for the actuation; (c) executing, by the computing device, an operation enhancement algorithm to determine a desired operation of the controllable components, wherein the first controllable component is excluded from the operation enhancement algorithm based on the disregard indicator; (d) determining, by the computing device, that the first controllable component is eligible for the actuation; and (e) disassociating the disregard indicator from the first controllable component.

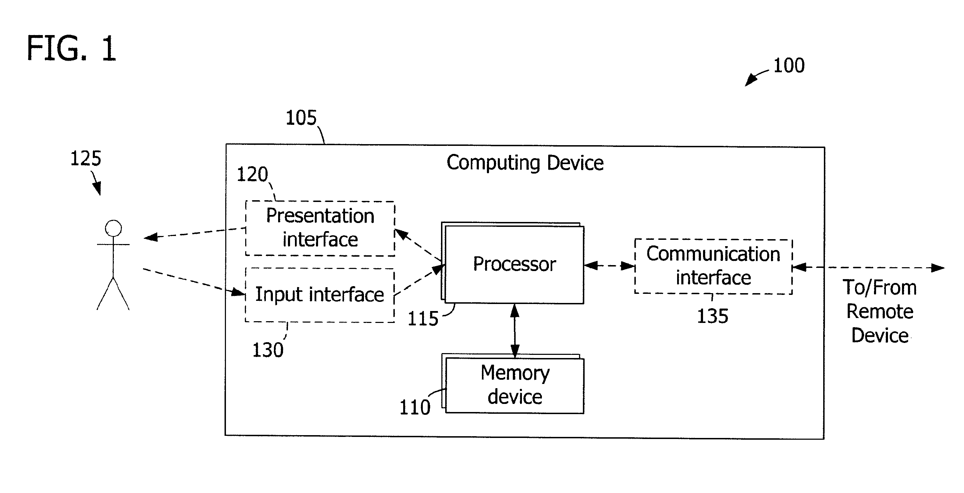

Fig. 1 is a block diagram of an example computer system 100 that includes a computing device 105 including a memory device 110 that may be used to operate utility equipment. In the example embodiment, computing device 105 includes a processor 115 that is coupled to memory device 110 for executing programmed instructions. In some embodiments, computer-executable instructions are stored in memory device 110. Alternatively, computer-executable instructions may be retrieved from another device via a computer network. Computing device 105 is programmable to perform one or more operations described herein by programming processor 115. For example, processor 115 may be programmed by encoding an operation as one or more computer-executable instructions and providing the computer-executable instructions in memory device 110. Processor 115 may include one or more processing units (e.g., in a multi-core configuration).

Processor 115 may include, but is not limited to, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a non-transitory computer readable medium, including, without limitation, a storage device and/or a memory device. Such instructions, when executed by a processor, cause the processor to perform at least a portion of the methods described herein. The above examples are example only, and thus are not intended to limit in any way the definition and/or meaning of the term processor.

In the example embodiment, memory device 110 is one or more devices that enable information, such as executable instructions and/or other data, to be selectively stored and retrieved. Memory device 110 may include one or more computer readable media, such as, without limitation, dynamic random access memory (DRAM), static random access memory (SRAM), a solid state disk, and/or a hard disk. Memory device 110 may be configured to store, without limitation, executable instructions and/or any other type of data suitable for use with the methods described herein.

In the example embodiment, computing device 105 includes a presentation interface 120 that is coupled to processor 115. Presentation interface 120 is configured to output (e.g., display, print, and/or otherwise output) information, such as, but not limited to, controllable components, operating conditions, decision variables, and/or a desired operation of one or more controllable components, to a user 125. For example, presentation interface 120 may include a display adapter (not shown in Fig. 1) that is coupled to a display device, such as a cathode ray tube (CRT), a liquid crystal display (LCD), an organic LED (OLED) display, and/or an "electronic ink" display. In some embodiments, presentation interface 120 includes more than one display device. In addition to, or in the alternative, presentation interface 120 may include a printer.

In some embodiments, computing device 105 includes an input interface 130 that receives input from user 125. For example, input interface 130 may be configured to receive a selection or entry of configuration data (e.g., one or more threshold values) and/or any other information suitable for use with the methods and systems described herein.

In the example embodiment, input interface 130 is coupled to processor 115 and may include, for example, a keyboard, a pointing device, a mouse, a stylus, a touch sensitive panel (e.g., a touch pad or a touch screen), a gyroscope, an accelerometer, a position detector, and/or an audio input interface. A single component, such as a touch screen, may function as both a display device of presentation interface 120 and as input interface 130.

Computing device 105 may include a communication interface 135 coupled to processor 115. Communication interface 135 is coupled in communication with a remote device, such as another computing device 105. For example, communication interface 135 may include, without limitation, a wired network adapter, a wireless network adapter, and/or a mobile telecommunications adapter.

In an example embodiment, computing device 105 stores in memory device 110, and/or is operable to access via communication interface 135 (e.g., from another computing device 105), data for use in operating utility equipment. For example, such data may include, but is not limited to only including, configuration data (e.g., one or more threshold values) and/or operating data (e.g., activations, actuations, and/or operating conditions) associated with utility equipment.

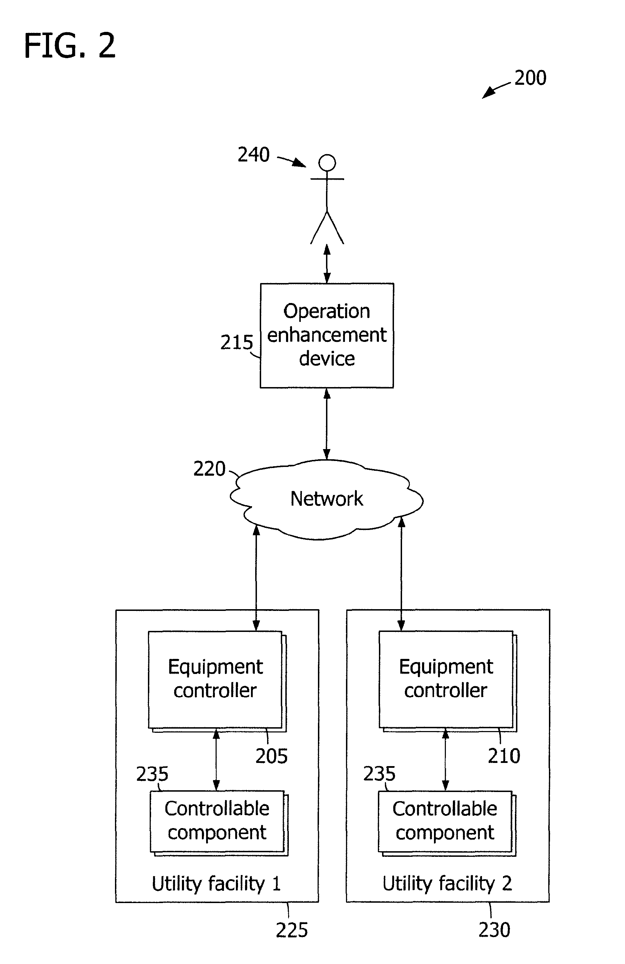

Fig. 2 is block diagram of an example utility system 200 including a first equipment controller 205, a second equipment controller 210, and an operation enhancement device 215 that are coupled in communication via a network 220. First equipment controller 205 is included within a first utility facility 225, and second equipment controller 210 is included within a second utility facility 230. First utility facility 225 and second utility facility 230 may include, but are not limited to only including, utility substations. Equipment controllers 205 and 210 are configured to monitor and/or operate utility equipment that includes one or more controllable components 235. Controllable components 235 may include, but are not limited to only including, switches, transformers, capacitors, voltage regulators, valves, and/or motors. In some embodiments, equipment controllers 205 and 210 include supervisory control and data acquisition (SCADA) devices. Further, each of first utility facility 225 and second utility station 230 may include any quantity of equipment controllers 205 and 210.

Network 220 may include, without limitation, the Internet, a local area network (LAN), a wide area network (WAN), a wireless LAN (WLAN), a mesh network, and/or a virtual private network (VPN). In example embodiments, first equipment controller 205, second equipment controller 210, and operation enhancement device 215 are computing devices 105 (shown in Fig. 1). While certain operations are described below with respect to particular computing devices 105, it is contemplated that any computing device 105 may perform any of the described operations. Moreover, in the example embodiment, each computing device 105 is coupled to network 220 via communication interface 135 (shown in Fig. 1). In an alternative embodiment, operation enhancement device 215 is integrated with first equipment controller 205 and/or second equipment controller 210.

In example embodiments, equipment controllers 205 and 210 are configured to transmit to operation enhancement device 215 operating conditions associated with utility equipment. For example, such operating conditions may include, but are not limited to only including, an equipment actuation event, a temperature, a pressure, a utility output level, a utility input level, a utility consumption level, a malfunction, and/or a service interruption. Operation enhancement device 215 receives and stores the operating conditions transmitted by equipment controllers 205 and 210.

Operation enhancement device 215 may interact with a user 240 (e.g., via input interface 130 and/or presentation interface 120, shown in Fig. 1). For example, operation enhancement device 215 may be configured to receive configuration data, such as threshold values, and/or operation enhancement requests from user 240. In addition, or alternative to, operation enhancement device 215 may be configured to present operating conditions to user 240.

Operation enhancement device 215 may be positioned remote to first utility facility 225 and/or remote to second utility facility 230. In addition, or alternative to, an operation enhancement device 215 may be included in each of first utility facility 225 and second utility facility 230 and configured to interact with the corresponding equipment controller 205 and 210.

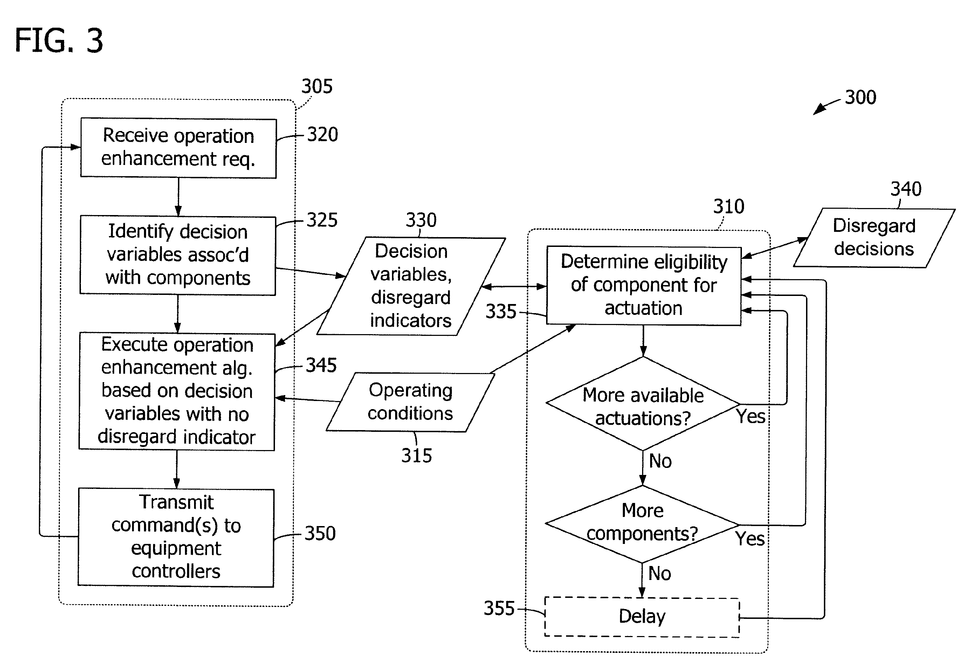

Fig. 3 is a flowchart of an example method 300 that may be used in operating utility equipment within utility system 200 (shown in Fig. 2). In example embodiments, method 300 includes a first thread 305 and a second thread 310, which may be referred to as a background thread. First thread 305 and second thread 310 may be executed concurrently (also known as being executed "in parallel") in a single process or in separate processes. Alternatively, the operations shown in first thread 305 and second thread 310 may be combined into a single thread. The operations described may be performed in a single thread without interfering with other operations performed by utility system 200.

Referring to Figs. 2 and 3, in example embodiments, method 300 is executed by operation enhancement device 215. In addition, or alternative to, any portion of the operations described may be performed by first equipment controller 205, second equipment controller 210, and/or any other computing device 105 (shown in Fig. 1).

In example embodiments, operating conditions 315 associated with controllable components 235 are stored by equipment controllers 205 and 210 and/or operation enhancement device 215. Operation enhancement device 215 receives 320 an operation enhancement request from a user 240 and/or from another computing device 105. The operation enhancement request represents a request to execute an operation enhancement algorithm that is associated with one or more objectives. For example, such objectives may include, but are not limited to only including, increasing the real power and/or the power factor in an electricity distribution system and/or improving the voltage in an electricity distribution system. In addition, or alternative to, operation enhancement device 215 may be programmed to execute the operation enhancement algorithm as desired (e.g., in response to one or more events received from equipment controllers 205 and 210) and/or repeatedly (e.g., periodically or continually).

In example embodiments, operation enhancement device 215 stores a plurality of operation enhancement algorithms. Each algorithm is associated with a plurality of decision variables that represent a potential output of the algorithm, and each decision variable is associated with one or more controllable components 235. For example, a decision variable may represent an actuation (e.g., an activation and/or an adjustment) of a controllable component 235. A controllable component 235 may be associated with a plurality of decision variables.

In response to the operation enhancement request, operation enhancement device 215 identifies 325 the decision variables associated with the corresponding operation enhancement algorithm. For example, operation enhancement device 215 may identify 325 decision variables that may be output by the operation enhancement algorithm. Each decision variable is associated with a controllable component 235. The identified decision variables and/or associated controllable components 235 are included in a list 330 of relevant decision variables.

Operation enhancement device 215 determines 335 whether each controllable component 235 associated with a decision variable in list 330 is eligible for one or more actuations based on operating conditions 315. In example embodiments, operation enhancement device 215 determines 335 the eligibility of controllable component 235 to be actuated in each available manner in which controllable component 235 may be actuated. For example, operation enhancement device 215 may determine 335 the eligibility of both an increase and a decrease to the voltage level associated with controllable component 235. Operation enhancement device 215 may determine 335 that a first controllable component is ineligible for an actuation based at least in part on one or more past and/or current operating conditions associated with the first controllable component.

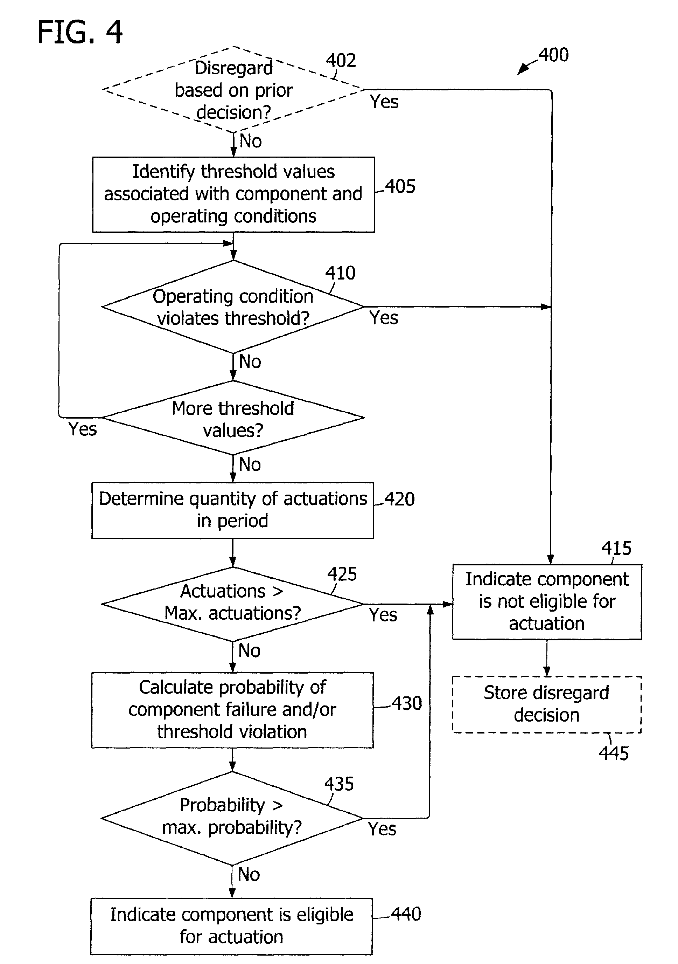

Fig. 4 is an example method 400 for determining 335 (shown in Fig. 3) whether a controllable component 235 (shown in Fig. 2) is eligible for an actuation. In example embodiments, the determination 335 may be based on a predetermined operating threshold value, a maximum quantity of actuations (e.g., activations), and/or a probability of failure.

Referring to Figs. 2 and 4, operation enhancement device 215 identifies 405 any predetermined threshold values (e.g., a minimum voltage and/or a maximum temperature) that are associated with controllable component 235 and with an operating condition 315 (shown in Fig. 3). Operation enhancement device 215 determines 410 whether each threshold value is violated by a corresponding operating condition 315.

A threshold value may be defined as a minimum or as a maximum. A maximum threshold value is considered violated when operating condition 315 is greater than the maximum threshold value. A minimum threshold value is considered violated when operating condition 315 is less than the minimum threshold value. For example, operation enhancement device 215 may compare a current temperature of a capacitor bank to a maximum temperature threshold value associated with the capacitor bank. If the current temperature exceeds the maximum temperature threshold value, the maximum temperature threshold value is violated.

When an operating condition 315 violates a corresponding threshold value, operation enhancement device 215 indicates 415 that controllable component 235 is ineligible for an actuation. For example, operation enhancement device 215 may indicate such ineligibility when the actuation of controllable component 235 would result in the operation condition further violating the corresponding threshold value. In the example embodiment, operation enhancement device 215 indicates 415 that controllable component 235 is ineligible for the actuation by associating a disregard indicator with controllable component 235 and/or with any decision variables that correspond to controllable component 235 in decision variable list 330. The disregard indicator represents (e.g., to first thread 305, shown in Fig. 3) that the first controllable component is ineligible for the actuation.

Operation enhancement device 215 determines 410 whether each threshold value associated with controllable component 235 is violated, as described above. If no threshold value is violated, operation enhancement device 215 may continue evaluating operating conditions 315 associated with controllable component 235, as described below.

In the example embodiment, operating conditions 315 include a history of past actuations of controllable component 235. Further, a predetermined maximum quantity of actuations, optionally of a particular type (e.g., activations), within a predetermined period (e.g., the previous 12 hours, the previous 24 hours, the previous 48 hours, or between the current time and the start of the current day) is associated with controllable component 235. Operation enhancement device 215 determines 420 the quantity of actuations of controllable component 235 within the predetermined period and compares 425 the determined quantity of actuations to the maximum quantity of actuations. When the determined quantity of actuations exceeds the maximum quantity of actuations, operation enhancement device 215 indicates 415 that controllable component 235 is ineligible for actuation. If the determined quantity of actuations does not exceed the maximum quantity of actuations, operation enhancement device 215 may continue evaluating operating conditions 315 associated with controllable component 235, as described below.

In the example embodiment, operation enhancement device 215 calculates 430 a probability that controllable component 235 will fail when the actuation is performed. Operation enhancement device 215 may calculate 430 a probability that controllable component 235 will fail at least in part by determining, based on past and/or current operating conditions 315, a probability that one or more operating conditions 315 will violate a corresponding threshold value (e.g., as described above with reference to determining 410 a threshold value violation) if the actuation of controllable component 235 is performed. For example, operation enhancement device 215 may determine a rate of change in an operating condition 315 and estimate the time at which the operating condition 315 will violate a corresponding threshold value based on the rate of change.

Operation enhancement device 215 determines 435 whether the calculated probability exceeds a predetermined maximum probability threshold value (e.g., 30%, 40%, or 50%). If so, operation enhancement device indicates 415 that controllable component 235 is ineligible for the actuation. Otherwise, operation enhancement device 215 indicates 440 that controllable component 235 is eligible for the actuation. For example, operation enhancement device 215 may indicate 440 that controllable component 235 is eligible for the actuation at least in part by disassociating a disregard indicator, if any, from controllable component 235 and/or from any decision variables that correspond to controllable component 235 in decision variable list 330.

In some embodiments, after indicating 415 that controllable component 235 is ineligible for the actuation, operation enhancement device 215 stores 445 the decision to disregard controllable component 235 and/or decision variables associated with controllable component 235. For example, referring to Figs. 2-4, operation enhancement device 215 may store 445 the disregard decision in a list 340 of disregard decisions.

In the example embodiment, the disregard decision represents a heuristic determined by operation enhancement device 215 while determining 335 whether controllable component 235 is eligible for an actuation. The heuristic may indicate, for example, that controllable component 235 will be ineligible for the actuation indefinitely (e.g., due to being inoperable) or that controllable component 235 will be ineligible for the actuation until some future time. In one example, operation enhancement device 215 calculates the time at which controllable component 235 will become eligible for the actuation, such as by calculating when the quantity of actuations in the predetermined period will fall below the maximum quantity of actuations, and/or by estimating when an operating condition will fall below a predetermined threshold value. Operation enhancement device 215 stores 445 the decision to disregard controllable component until the time at which controllable component 235 will become eligible for actuation.

In such embodiments, prior to evaluating operating conditions 315 associated with controllable component 235, as described above, operation enhancement device 215 determines 402 whether to disregard controllable component 235 and/or decision variables associated with controllable component 235 based on a decision stored in disregard decision list 340. For example, if disregard decision list 340 includes a decision indicating that controllable component is not yet eligible for the actuation, operation enhancement device may indicate 415 that controllable component 235 is ineligible for the actuation without evaluating operating conditions 315 associated with controllable component 235. Such embodiments facilitate increasing performance of method 400 by bypassing operations that will produce a known result. Further, such embodiments facilitate enabling second thread 310 to avoid unnecessary evaluation of operating conditions 315 when second thread 310 is restarted.

Referring to Figs. 2 and 3, in the example embodiment, operation enhancement device 215 determines 335 the eligibility of each controllable component 235 associated with a decision variable in decision variable list 330, such as described above with reference to Fig. 4. Operation enhancement device 215 executes 345 the requested operation enhancement algorithm to determine a desired operation of controllable components 235 based on operating conditions 315 and decision variable list 330. In the example embodiment, operation enhancement device 215 excludes from the operation enhancement algorithm any decision variables that are associated with a disregard indicator in decision variable list 330. Accordingly, the operation enhancement algorithm will not produce a desired operation indicating that an ineligible actuation of a controllable component 235 should be performed.

For example, if a first decision variable is associated with a first controllable component that is ineligible for any actuation, the first decision variable is associated with a disregard indicator in decision variable list 330. Conversely, a second decision variable associated with a second controllable component that is eligible for actuation is not associated with a disregard indicator. Accordingly, operation enhancement device 215 may execute 345 the operation enhancement algorithm, excluding the first decision variable but including the second decision variable. Operation enhancement device 215 may thereby determine a desired operation (e.g., an actuation) of the second controllable component.

Similarly, a first decision variable may represent a voltage increase associated with a controllable component, and a second decision variable may represent a voltage decrease associated with the controllable component. If the controllable component is ineligible for an increase in voltage but eligible for a voltage decrease, the first decision variable will be associated with a disregard indicator, and the second decision variable will not be associated with a disregard indicator.

Operation enhancement device 215 transmits 350 a command to an equipment controller, such as first equipment controller 205 or second equipment controller 210, that is associated with the second controllable component. The command represents the desired operation of the second controllable component. Equipment controllers 205 and 210 execute commands received from operation enhancement device 215 to achieve the desired operation.

Further, as described above with reference to Fig. 4, after executing 345 the operation enhancement algorithm at a first time, operation enhancement device 215 may determine 335 that the first controllable component is eligible for an actuation and disassociate the corresponding disregard indicator from the first controllable component and/or the first decision variable in decision variable list 330. Accordingly, at a second time that is after the first time, operation enhancement device 215 may execute 345 the operation enhancement algorithm, including both the first decision variable and the second decision variable.

In some embodiments, operation enhancement device 215 includes a plurality of operation enhancement algorithms, each of which may be associated with an objective, such as increasing real power and/or improving voltage. As described above, operation enhancement device 215 may receive 320 an operation enhancement request associated with a first operation enhancement algorithm, identify 325 decision variables associated with the first operation enhancement algorithm and store the decision variables in decision variable list 330. A disregard indicator may be associated with one or more decision variables. Subsequently, operation enhancement device 215 may receive 320 an operation enhancement request associated with a second operation enhancement algorithm and identify 325 decision variables associated with the second operation enhancement algorithm. Any of the decision variables that are associated with the second operation enhancement algorithm and that have previously been associated with a disregard indicator may be excluded when executing 345 the second operation enhancement algorithm.

In the example embodiment, second thread 310 is executed repeatedly. For example, operation enhancement device 215 may continually execute second thread 310. Alternatively, after determining 335 the eligibility of all controllable components 235 that are associated with a decision variable in decision variable list 330, operation enhancement device 215 may delay 355 for a predetermined duration (e.g., 5 seconds, 30 seconds, or 60 seconds) before again determining 335 the eligibility of all controllable components 235 that are associated with a decision variable in decision variable list 330. Repeatedly executing second thread 310 enables operation enhancement device 215 to maintain a current decision variable list 330, such that operation enhancement device 215 may respond to an operation enhancement request without incurring a delay associated with determining 335 whether each controllable component 235 is eligible for each available actuation.

Embodiments described herein facilitate improving the performance of one or more operation enhancement algorithms associated with a utility system by decreasing the quantity of decision variables considered by the algorithm, which may be referred to as reducing the search space. Specifically, decision variables associated with controllable components that are not eligible for consideration may be associated with a disregard indicator, and the operation enhancement algorithm may exclude decision variables associated with a disregard indicator. Accordingly, the algorithm may avoid manipulating decision variables that will produce infeasible and/or invalid results.

Embodiments described herein may be performed using a computer-based and/or computing-device-based operating environment as described herein. A computer or computing device may include one or more processors or processing units, system memory, and some form of non-transitory computer-readable media. Example non-transitory computer-readable media include flash memory drives, hard disk drives, digital versatile discs (DVDs), compact discs (CDs), floppy disks, and tape cassettes. By way of example and not limitation, computer-readable media comprise computer storage media and communication media. Computer-readable storage media are non-transitory and store information such as computer-readable instructions, data structures, program modules, or other data. Communication media typically embody computer-readable instructions, data structures, program modules, or other data in a modulated data signal such as a carrier wave or other transport mechanism and include any information delivery media. Combinations of any of the above are also included within the scope of computer-readable media.

Although described in connection with an example computing system environment, embodiments of the invention are operational with numerous other general purpose or special purpose computing system environments or configurations. Examples of well known computing systems, environments, and/or configurations that may be suitable for use with aspects of the invention include, but are not limited to, mobile computing devices, personal computers, server computers, hand-held or laptop devices, multiprocessor systems, gaming consoles, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the figures and described herein. Other embodiments of the invention may include different computer-executable instructions or components having more or less functionality than illustrated and described herein.

Aspects of the invention transform a general-purpose computer into a special-purpose computing device when configured to execute the instructions described herein.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other apparatus and methods.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

While the invention has been described in terms of various specific embodiments, those skilled in the art will recognize that the invention may be practiced with modification within the scope of the claims.

## Claims

1. A system (100) for use in operating utility equipment that includes a plurality of controllable components (235), said system comprising:
a memory device (110) configured to store operating conditions (315) associated with the controllable components;
a processor (115) coupled to said memory device and programmed to:
determine (335) that a first controllable component of the plurality of controllable components is ineligible for an actuation based on the stored operating conditions;
associate (415) a disregard indicator with the first controllable component, wherein the disregard indicator represents that the first controllable component is ineligible for the actuation; and
execute (345) an operation enhancement algorithm to determine a desired operation of the controllable components, wherein the first controllable component is excluded from the operation enhancement algorithm based on the disregard indicator.

2. A system (100) according to Claim 1, wherein said processor (115) is programmed to determine that the first controllable component (235) is ineligible for the actuation based on operating conditions including at least a history of actuations of the first controllable component.

3. A system (100) according to Claim 2, wherein the operating threshold represents a maximum quantity of actuations within a period, said processor (115) is programmed to determine (335) that the first controllable component is ineligible for the actuation at least in part by:
determining (420), based on the history of actuations, a quantity of actuations corresponding to the period; and
comparing (425) the determined quantity of actuations to the maximum quantity of actuations, wherein the first controllable component is ineligible for the actuation when the determined quantity of actuations exceeds the maximum quantity of actuations.

4. A system (100) according to Claim 1, 2 or 3, wherein:
said processor (115) is programmed to determine (335) that the first controllable component is ineligible for the actuation based further on a predetermined operating threshold value associated with the first controllable component (235); or
said processor (115) is programmed to determine (335) that the first controllable component (235) is ineligible for the actuation at least in part by calculating (430) a probability that the first controllable component will fail when the actuation is performed.

5. A system (100) according to any one of Claims 1 to 4, wherein said processor (115) is further programmed to:
determine (335) that a second controllable component of the plurality of controllable components is eligible for the actuation based on the stored operating conditions; and
determine (345) a desired operation of a second controllable component of the controllable components based on the operation enhancement algorithm.

6. A system (100) according to Claim 5, further comprising a communication interface (135) coupled to said processor (115) and configured to transmit (350) a command to an equipment controller (210) associated with the second controllable component (235), wherein the command represents the desired operation of the second controllable component.

7. A system (100) according to any one of Claims 1 to 6, further comprising a communication interface (135) coupled to said processor (115) and configured to receive the operating conditions from one or more equipment controllers (205) associated with the controllable components (235).

8. A method for use in operating utility equipment that includes a plurality of controllable components (235), said method comprising:
determining (335), by a computing device (115), that a first controllable component of a plurality of controllable components is ineligible for an actuation based at least in part on past operating conditions associated with the first controllable component;
associating (415), by the computing device (115), a disregard indicator with the first controllable component, wherein the disregard indicator represents that the first controllable component is ineligible for the actuation; and
executing (345), by the computing device (115), an operation enhancement algorithm to determine a desired operation of the controllable components, wherein the first controllable component is excluded from the operation enhancement algorithm based on the disregard indicator.

9. A method according to Claim 8, wherein the operation enhancement algorithm is a first operation enhancement algorithm of a plurality of operation enhancement algorithms, said method further comprising:
receiving, by the computing device (115), a request to execute the first operation enhancement algorithm; and
selecting the first controllable component (235) from the plurality of controllable components based on a predetermined association between the first controllable component and the first operation enhancement algorithm.

10. A method according to Claim 8 or Claim 9, wherein the operation enhancement algorithm is a first operation enhancement algorithm associated with a first objective, said method further comprising:
executing, by the computing device (115), a second operation enhancement algorithm that is associated with a second objective, wherein the first controllable component is excluded from the second operation enhancement algorithm based on the disregard indicator.

11. A method according to Claim 8, 9 or 10, wherein the first controllable component (235) is determined to be ineligible for the actuation based further on one or more current operating conditions.

12. A method according to any one of Claims 8 to 11, wherein:
determining that the first controllable component (235) is ineligible for the actuation based on past operating conditions comprises determining that the first controllable component (235) is ineligible for the actuation based at least in part on past actuations of the first controllable component; or
determining that the first controllable component (235) is ineligible for the actuation comprises calculating a probability that an operating condition associated with the first controllable component (235) will violate a predetermined threshold value when the actuation of the first controllable component is performed.

13. A method according to any one of Claims 8 to 12, wherein determining that the first controllable component is ineligible for the actuation comprises:
calculating a probability that the first controllable component (235) will fail when the actuation is performed; and
determining that the calculated probability exceeds a predetermined failure probability threshold value.

14. A method according to any one of Claims 8 to 13, wherein executing the operation enhancement algorithm comprises executing the operation enhancement algorithm at first time, said method further comprising:
after executing the operation enhancement algorithm at the first time, determining, by the computing device (115), that the first controllable component is eligible for the actuation;
disassociating the disregard indicator from the first controllable component (235); and
executing the operation enhancement algorithm at a second time that is after the first time, wherein the first controllable component (235) is included in the operation enhancement algorithm at the second time.

15. One or more non-transitory computer-readable storage media having computer-executable instructions embodied thereon, wherein when executed by at least one processor (115), the computer-executable instructions cause the at least one processor to perform the method of any one of Claims 9 to 14.
